# EUROPEAN PATENT SPECIFICATION

(11) **EP 0 927 319 B1**
(45) Date of publication and mention of the grant of the patent: **17.05.2000**
(21) Application number: 97918924.8
(22) Date of filing: 19.09.1997
(51) Int. Cl.: F16L 59/02, F16L 59/14

(54) **METHOD OF PRODUCING A PIPE SECTION AND PIPE SECTION PRODUCED BY SAID METHOD**
VERFAHREN ZUR HERSTELLUNG EINES ROHRABSCHNITTES UND ROHRABSCHNITT HERGESTELLT NACH DIESEM VERFAHREN
PROCEDE POUR PRODUIRE UNE SECTION DE TUYAU ET SECTION DE TUYAU AINSI PRODUITE

(30) Priority: 20.09.1996 DK 103196; 30.01.1997 US 36074 P
(43) Date of publication of application: 07.07.1999
(73) Proprietor: Rockwool International A/S, 2640 Hedehusene (DK)
(72) Inventor: HURLEY, Steve, Bridgend, Mid Glamorgan CF31 2AV (GB); GARN, Claus Bugge, Mississauga, Ontario L5R 1Y1 (CA)
(74) Representative: Halberg, Kristian
(86) International application number: DK9700398
(87) International publication number: WO9812466

(56) References cited:
- CH-A- 620 861
- DE-A- 2 848 391
- DK-B- 159 941
- SE-B- 315 776
- SE-B- 388 679
- US-A- 903 878
- US-A- 2 500 690

## Description

The present invention relates to a method of producing a pipe section for thermal insulation of a pipe, comprising forming a web of mineral fibers and a curable binder, curing said mineral fiber web, and cutting out one or more pipe sections of a mineral fiber product thus cured substantially parallel to the product plane.

Mineral fiber pipe sections are typically cylinder formed and comprise an axially extending central hole. The prior art pipe sections are typically provided with an axially extending slit so that they may be opened, and in an open state be placed on a pipe. After the pipe section has been mounted on the pipe, it is closed around the pipe to form a mantle thereon.

DE laid open publication No. 2848391 discloses a method for the preparation of pipe sections which have a sufficient flexibility to allow them to be mounted on pipe elbows. By this known method, mineral fiber plates are glued together to form a bloc in which each plate has a predominant fiber orientation, and where the fiber orientation of one plate is substantially perpendicular to the fiber orientation of the adjacent plates, and where pipe sections are cut out of the bloc parallel to the surfaces of the plates. The pipe sections thereby obtained will normally consist of at least two layers glued together and having crossing fiber orientation.

Due to their flexibility the prior art pipe sections have a relatively large self deflection which causes practical problems during transportation and during the mounting of said pipe section. Furthermore, the relatively large self deflection may give the user the impression of poor quality.

A further effect of the said layered structure is that the insulating efficiency of the prior art pipe sections varies in different radial directions. Thus, it is known that the insulating efficiency of a mineral fiber product depends on the orientation of the fibers, and that the insulating efficiency is less when the fibers extend perpendicularly to the surface to be insulated, than if the fibers are parallel to the surface.

Also the strength properties of the pipe sections, e.g. the ability to withstand compression, will depend on the fiber orientation.

The object of the present invention is to provide a method of the type mentioned above by which pipe sections that have more uniform insulating and strength properties than the known pipe sections may be produced.

The method according to the present invention is characterized in that the mineral fiber web is longitudinally compressed before it is cured, and the pipe section(s) is/are cut out of the cured mineral fiber product so that the longitudinal axis of the pipe section is substantially perpendicular to the direction of the longitudinal compression.

The invention is based on the discovery that by longitudinally compressing a conventionally produced mineral fiber web in which the mineral fibers are oriented predominantly in planes parallel to the surfaces of the web, the fibers are rearranged so that following the longitudinal compression they extend in various directions, seen from a longitudinal section through the mineral fiber web.

It has been found that by cutting out pipe sections or parts thereof of the cured mineral fiber product so that the longitudinal axis of the pipe section is perpendicular to the direction of the longitudinal compression, the pipe section obtains more uniform properties than pipe sections made from a mineral fiber web which has not been longitudinally compressed before the curing. This shows by in a significantly greater stiffness and strength in the longitudinal direction of the pipe section, which also manifests itself in a lower self deflection. Thus, the risk that the pipe section breaks during mounting as a result of its own weight, e.g. where the pipe section is only supported at one end, is reduced. Furthermore, the pipe section exhibits more uniform strength and insulating properties in the various directions perpendicular to the longitudinal axis of the pipe section.

A particularly advantageous effect of the longitudinal compression is obtained when the compression is effected in a ratio of from 2:1 to 5:1, and in particular in a ratio of from 3:1 to 4:1.

The longitudinal compression may be effected by a method known per se, e.g. as disclosed in CH patent No. 620,861, according to which a mineral fiber web is successively conveyed between at least two pairs of cooperating conveyor belts, the first pair of conveyor belts conveying the fiber web at a higher speed than the second pair.

The longitudinal compression may also be effected by using two or more pairs of rollers, where the conveying speed of the roller pairs is reduced in the direction of conveyance, cf. US patent No. 2,500,690.

A further improvement of the properties of the pipe sections produced may be obtained by subjecting the mineral fiber web to a vertical compression after the longitudinal compression but prior to the curing. The vertical compression is preferably effected in a ratio of up to 5:1.

The mineral fiber web used in the method according to the invention is preferably composed of synthetic mineral fibers, such as glass, stone and/or slag fibers, and in particular mineral fibers of the type used in plates, mats and shells for thermal insulation, fire retardation, noise reduction or noise control; reinforcement of construction materials, such as cement and plastics, as filler or as growth media for plants.

The curable binder is preferably heat curable. Examples of heat curable binders are phenol/formaldehyde resins of the resole or novolak type. They may be pure resins or they may be modified by e.g. urea, melamine and other nitrogen-containing compounds.

When heat curable binders of the above mentioned types are used, the curing of the longitudinally compressed and optionally subsequently vertically compressed mineral fiber web is preferably carried out in a curing oven at a temperature between 180 and 280 °C.

In stead of immediately cutting out the pipe section of the cured fiber web, it may be desirable to cut the web into suitable lengths before cutting out the pipe sections.

While i.a. the inlet of the curing oven may set a limit to the thickness of the cured mineral fiber web, it may be necessary, when producing pipe sections with large diameters, to form blocs of mineral fiber plates placed on top of each other and glued together, and to cut out the pipe sections thereof.

In the preparation of such blocs a thermo-stable glue and/or a glue having a low heating value is preferably used. Prior to the glueing the surfaces of the plates may advantageously be levelled so as to make them plane and to remove tracks from the conveyor belts in the curing oven.

The cutting of the pipe sections may be effected by a method known per se, e.g. by using a computerized saw comprising a cutting string.

In the production of pipes having an axial slit it may be desirable to provide one of the surfaces of the slit with an axially extending groove and the opposite slit surface with a corresponding axially extending tongue so as to obtain a particularly effective insulating property when bringing the two slit surfaces together.

The part of the pipe section diametrically opposite the slit may expediently be provided with an internal, axially extending slit having a depth which is less than the thickness of the wall of the pipe section. The presence of such a slit at the inside of the pipe section facilitates the opening of the pipe section and at the same time reduces the risk of the wall of the pipe section being damaged by repeated openings and closings of the pipe section. It has been found that by cutting the slit so that it extends substantially perpendicularly to the surface plane of the mineral fiber web, the pipe section is better protected against damage in the region along the slit. The slit may advantageously be shaped as a T by a method known per se, e.g. as disclosed in SE laid open publication No. 388,679. Furthermore, it has been found that the slit should not have a depth greater than about 60 % of the thickness of the wall of the pipe section, and in case of larger pipe diameters and thicker walls the depth of the slit may advantageously be reduced.

In stead of cutting out a pipe section in one piece, it may be cut out in two or more parts which, when put together and interconnected, form a pipe section. The joining of the parts may e.g. be obtained by using dowels and corresponding holes, glue or tape or by wrapping the joint of pipe section parts together by use of treads, textile bands, or the like.

The invention also relates to a pipe section produced by the method described above.

The pipe sections according to the invention are suitable for insulating cold pipes as well as hot pipes, and because of the fire resistance of the mineral fiber material they are suitable for high temperature insulation.

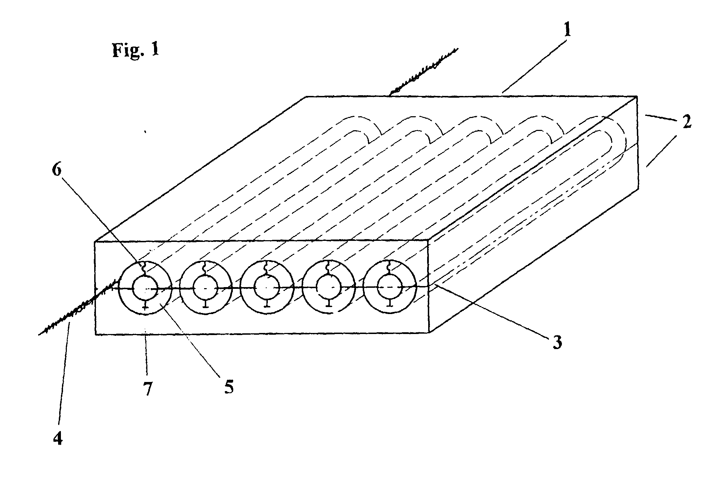

A pipe section produced by the method according to the invention will now be described by reference to a drawing, wherein figure 1 illustrates a bloc of mineral fiber material during the cutting of pipe sections.

Figure 1 illustrates a bloc (1) composed of two mineral fiber webs (2) by the joint (3), and a cutting string (4) by means of which pipe sections (5) having a tongue/groove-joint (6) and a T-shaped hinge slit (7) are cut out of the bloc in the transverse direction of the bloc and parallel to the main surface planes of the bloc.

The invention will now be described in further detail by means of the following example.

### Example:

A mineral fiber web comprising mineral fibers to which a heat curable binder had been added in an amount of about 3.5 w/w % and a mineral oil in an amount of about 0.2 w/w % was produced by collecting the fibers directly on a conveyor belt.

The thickness of the mineral fiber web was reduced to 0.34 m before the web was conveyed through a longitudinal compression unit comprising two pairs of rollers, where the rotational speed of the rollers in the first pair of rollers was so much higher than the rotational speed of the rollers in the second pair of rollers that a longitudinal compression of 4:1 was obtained.

Following the longitudinal compression the web was compressed vertically in a ratio of 2:1.

The vertically compressed web was subsequently conveyed through a curing oven heated to a temperature of 240 °C. After the heat curing the mineral fiber web was cut into plates having a length of 1219 mm and a width of 940 mm, and after having been levelled by milling the plates were placed two and two on top of each other and glued together. From the so formed mineral fiber elements pipe sections having an outer diameter of 194 mm and a inner diameter of 90 mm were then cut out in a direction perpendicular to the direction of the longitudinal compression and parallel to the main surfaces of the elements.

The pipe sections thus formed were finally cut into lengths of 0.9 m.

## Claims

1. A method of producing a pipe section for thermal insulation of pipes, comprising forming a web of mineral fibers and a curable binder, curing said mineral fiber web, and cutting out one or more pipe sections of the mineral fiber product thus cured substantially parallel to the product plane, **characterized in** that the mineral fiber web is longitudinally compressed before it is cured, and the pipe section(s) is/are cut out of the cured mineral fiber product so that the longitudinal axis of the pipe section is substantially perpendicular to the direction of the longitudinal compression.

2. A method according to claim 1, **characterized in** that the mineral fiber web is longitudinally compressed in a ratio of from 2:1 to 5:1.

3. A method according to claim 2, **characterized in** that the mineral fiber web is longitudinally compressed in a ratio of from 3:1 to 4:1.

4. A method according to any of the preceding claims, **characterized in** that the longitudinally compressed mineral fiber web is vertically compressed in a ratio of up to 5:1.

5. A method according to any of the preceding claims, **characterized in** that two or more mineral fiber plates are glued together to form a stack and one or more pipe sections are cut out of said stack.

6. A pipe section produced by the method according to any of the preceding claims.

7. A pipe section according to claim 6, **characterized in** that the pipe section is provided with an axially extending slit through the wall of the pipe section, which slit is provided with a longitudinally extending tongue on one slit surface and a corresponding groove on the opposite slit surface.

8. A pipe section according to claim 6 or 7, **characterized in** that the pipe section is provided with an internal, axially extending slit having a depth which is less than 60 % of wall thickness of the pipe section.

9. A pipe section according to claim 8, **characterized in** that the internal slit is formed as a T.

10. A pipe section according to claim 8 or 9, **characterized in** that the internal slit is cut substantially perpendicularly to the surface plane of the mineral fiber web.

## Patentansprüche

1. Verfahren zur Herstellung eines Rohrabschnitts für das Wärmeisolieren von Rohren, welches umfaßt: Ausbilden eines Vlieses aus Mineralfasern und einem aushärtbaren Bindemittel, Aushärten des Mineralfaservlieses, und Ausschneiden von einem Rohrabschnitt oder mehr aus dem auf diese Weise ausgehärteten Mineralfaserprodukt, und zwar im wesentlichen parallel zur Produktebene, dadurch gekennzeichnet, daß das Mineralfaservlies vor dem Aushärten in Längsrichtung verdichtet wird, und der/die Rohrabschnitt(e) aus dem ausgehärteten Mineralfaserprodukt so ausgeschnitten wird/werden, daß die Längsachse des Rohrabschnitts im wesentlichen senkrecht zur Richtung der Längsverdichtung ist.

2. Verfahren nach Anspruch 1, dadurch gekennzeichnet, daß das Mineralfaservlies in Längsrichtung im Verhältnis 2:1 bis 5:1 verdichtet wird.

3. Verfahren nach Anspruch 2, dadurch gekennzeichnet, daß das Mineralfaservlies in Längsrichtung im Verhältnis 3:1 bis 4:1 verdichtet wird.

4. Verfahren nach einem der vorstehenden Ansprüche, dadurch gekennzeichnet, daß das in Längsrichtung verdichtete Mineralfaservlies in vertikaler Richtung in einem Verhältnis von bis zu 5:1 verdichtet wird.

5. Verfahren nach einem der vorstehenden Ansprüche, dadurch gekennzeichnet, daß zwei Mineralfaserplatten oder mehr zusammengeklebt werden, um ein Stapelpaket zu bilden, und ein Rohrabschnitt oder mehr aus dem Stapel ausgeschnitten werden.

6. Rohrabschnitt, welcher durch das Verfahren nach einem der vorstehenden Ansprüche hergestellt ist

7. Rohrabschnitt nach Anspruch 6, dadurch gekennzeichnet, daß der Rohrabschnitt mit einem sich durch die Wandung des Rohrabschnitts in Axialrichtung erstreckenden Schlitz versehen ist, wobei der Schlitz auf der einen Schlitzfläche mit einer sich in Längsrichtung erstreckenden Feder und auf der gegenüberliegenden Schlitzfläche mit einer entsprechenden Nut versehen ist.

8. Rohrabschnitt nach Anspruch 6 oder 7, dadurch gekennzeichnet, daß der Rohrabschnitt mit einem sich in Axialrichtung erstreckenden innenliegenden Schlitz versehen ist, dessen Tiefe weniger als 60% der Wanddicke des Rohrabschnitts beträgt.

9. Rohrabschnitt nach Anspruch 8, dadurch gekennzeichnet, daß der innenliegende Schlitz T-förmig ausgebildet ist

10. Rohrabschnitt nach Anspruch 8 oder 9, dadurch gekennzeichnet, daß der innenliegende Schlitz im wesentlichen senkrecht zur Oberflächenebene des Mineralfaservlieses ausgeschnitten ist.

## Revendications

1. Procédé de fabrication d'une section de tube pour l'isolation thermique de tubes, consistant à former une toile de fibres minérales avec un liant polymérisable, à polymériser ladite toile de fibre minérale, et à y découper une ou plusieurs sections de tube à partir du produit de fibre minérale ainsi polymérisé sensiblement parallèles au plan du produit, caractérisé en ce que la toile de fibre minérale est comprimée longitudinalement avant d'être polymérisée, et en ce que la (les) section (s) de tube est (sont) découpée (s) à partir du produit de fibre minérale polymérisée, de telle manière que l'axe longitudinal de la section de tube soit sensiblement perpendiculaire à la direction de la compression longitudinale.

2. Procédé suivant la revendication 1, caractérisé en ce que la toile de fibre minérale est comprimée longitudinalement dans un rapport de 2 : 1 à 5 : 1.

3. Procédé suivant la revendication 2, caractérisé en ce que la toile de fibre minérale est comprimée dans un rapport de 3 : 1 à 4 : 1.

4. Procédé suivant l'une quelconque des revendications précédentes, caractérisé en ce que la toile de fibre minérale comprimée longitudinalement est comprimée verticalement dans un rapport de 5 : 1.

5. Procédé suivant l'une quelconque des revendications précédentes, caractérisé en ce que deux ou plusieurs plaques de fibres minérales sont collées ensemble pour former un empilement, et en ce qu'une ou plusieurs sections de tube sont découpées dans ledit empilement.

6. Section de tube fabriquée suivant le procédé de l'une quelconque des revendications précédentes.

7. Section de tube suivant la revendication 6, caractérisée en ce que la section de tube est pourvue d'une fente s'étendant axialement à travers la paroi de la section de tube, et en ce que ladite fente est munie d'une languette s'étendant sur l'une des faces de la fente, et d'une rainure correspondante sur la face opposée de la fente.

8. Section de tube suivant l'une des revendications 6 ou 7, caractérisée en ce que la section de tube est pourvue d'une fente interne s'étendant axialement et ayant une profondeur inférieure à 60 % de l'épaisseur de la paroi de la section de tube.

9. Section de tube suivant la revendication 8, caractérisée en ce que la fente interne a une section en T.

10. Section de tube suivant l'une des revendications 8 ou 9, caractérisée en ce que la fente interne est coupée sensiblement perpendiculairement au plan de surface de la toile de fibre minérale.
